# EUROPEAN PATENT SPECIFICATION

(11) **EP 1 355 527 B1**
(45) Date of publication and mention of the grant of the patent: **14.07.2004**
(21) Application number: 02711534.4
(22) Date of filing: 01.02.2002
(51) Int. Cl.: A01K 5/02, A01K 39/012, A01K 39/00

(54) **POULTRY HOUSE EQUIPMENT AND METHOD FOR OPERATING SUCH POULTRY HOUSE EQUIPMENT**
GEFLÜGELHAUSEINRICHTUNG UND VERFAHREN ZUM BETRIEB EINER SOLCHER GEFLÜGELHAUSEINRICHTUNG
EQUIPEMENT D'ELEVAGE DE VOLAILLES ET PROCEDE PERMETTANT LE FONCTIONNEMENT DE L'EQUIPEMENT D'ELEVAGE DE VOLAILLES

(30) Priority: 02.02.2001 NL 1017274
(43) Date of publication of application: 29.10.2003
(73) Proprietor: Korsten, Nicolaas Andreas Maria, 6091 NA Leveroy (NL)
(72) Inventor: Korsten, Nicolaas Andreas Maria, 6091 NA Leveroy (NL)
(74) Representative: Dorna, Peter
(86) International application number: PCT/NL2002/000078
(87) International publication number: WO 2002/060241

(56) References cited:
- US-A- 2 800 106
- US-A- 3 693 593

## Description

The invention relates to poultry house equipment comprising feed bowls, which feed bowls are movable in horizontal direction.

The invention furthermore relates to a method for operating such poultry house equipment.

Such poultry house equipment is known from US patent US-A-3,693,593, wherein feed bowls are moved to a feed station by means of a conveying system, at which feed station the feed bowls are filled with feed. Following that, the feed bowls are returned to the poultry house. In said US patent specification it is indicated that this preferably takes place during the night, when the animals are resting. This means that the feed bowls take up a temporarily fixed position in the poultry house when the animals are feeding therefrom.

Poultry house equipment usually comprises both water bowls and feed bowls for the purpose of making both water and feed available to the poultry.

The poultry that is present in the poultry house will gather around the feed bowls and deposit excrements at those locations. In addition, water will be spilled when stationary water bowls are used, as a result of which the areas surrounding the water bowls will become relatively moist.

Owing to the relatively large amounts of excrements deposited at a particular location as well as to the relatively moist areas, the living conditions in the poultry house are not optimal.

It is an object of the invention to provide poultry house equipment wherein the problem of the known poultry house equipment is avoided.

This objective is accomplished with the poultry house equipment according to claim 1 in that the poultry house equipment comprises at least one water and/or feed supply conduit and water bowls and/or feed bowls connected to said conduit, as well as means for moving the conduit and the bowls connected thereto in a direction at least substantially transversely to the longitudinal direction of the conduit.

In this way it is possible, by moving a single conduit, to move a number of water bowls and/or feeds bowls connected thereto simultaneously therewith.

Preferred embodiments of the invention are set out in the dependent claims 2 to 8.

Since the water bowls and/or feed bowls are movable in horizontal direction within the poultry house, the animals will no longer concentrate around a fixed location in the poultry house, but they will scatter all over the poultry house. This means that also their excrements will be evenly distributed over the entire poultry house. The spilling of water will no longer take place at one concentrated location, but it will likewise occur along the entire path along which the water bowls are moved. As a result, the occurrence of relatively moist places in the poultry house will be prevented.

In this manner the poultry house floor will be fouled evenly, as a result of which the living conditions in the poultry house will be improved.

If the animals wish to eat and/or drink at a particular point in time, they will have to move to the water bowls and/or feed bowls. An alternative for the poultry is to wait until the water bowls and/or feed bowls are automatically moved in their direction.

Since the water bowls and/or feed bowls move relatively slowly, those animals that are present in the path of the water bowls and/or feed bowls will be slightly prodded, which will make them move out of the way.

It is noted that the water bowls and feed bowls of other poultry house equipment as known per se are located at a fixed position within the poultry house. With said known poultry house equipment it is possible, however, to move the water bowls and/or feed bowls in vertical direction so as to position said water bowls and/or feed bowls at a desired vertical level with respect to the floor, and furthermore so as to raise said water bowls and/or feed bowls to a level relatively high above the floor. This latter situation is desirable when the poultry house is to be cleared and cleaned.

During normal use of the poultry house equipment, i.e. when the poultry is present in the poultry house, said water bowls and/or feed bowls are present at a fixed position within the poultry house, however.

Another object of the invention is to provide a method for operating the poultry house equipment wherein the problems of the known poultry house equipment are avoided.

This objective is accomplished with the method according to claim 9 in that the poultry house equipment comprises at least one water and/or feed supply conduit and water bowls and/or feed bowls connected to said conduit, wherein the conduit and the bowls connected thereto are moved back and forth substantially continuously in a direction substantially transversely to the longitudinal direction of the conduit.

Since the water bowls and/or feed bowls are moved back and forth continuously, the animals will feed and drink at varying places in the poultry house, so that they will also deposit excrements and spill water at varying places in the poultry house.

The invention will now be explained in more detail with reference to the drawings, wherein:
Figure 1 is a cross-sectional view of a poultry house comprising equipment according to the invention;
Figure 2 is a top plan view of the poultry house of Figure 1;
Figure 3 is a perspective view of the equipment according to the invention of the poultry house that is shown in Figures 1 and 2.

Like parts are indicated by the same numerals in the figures.

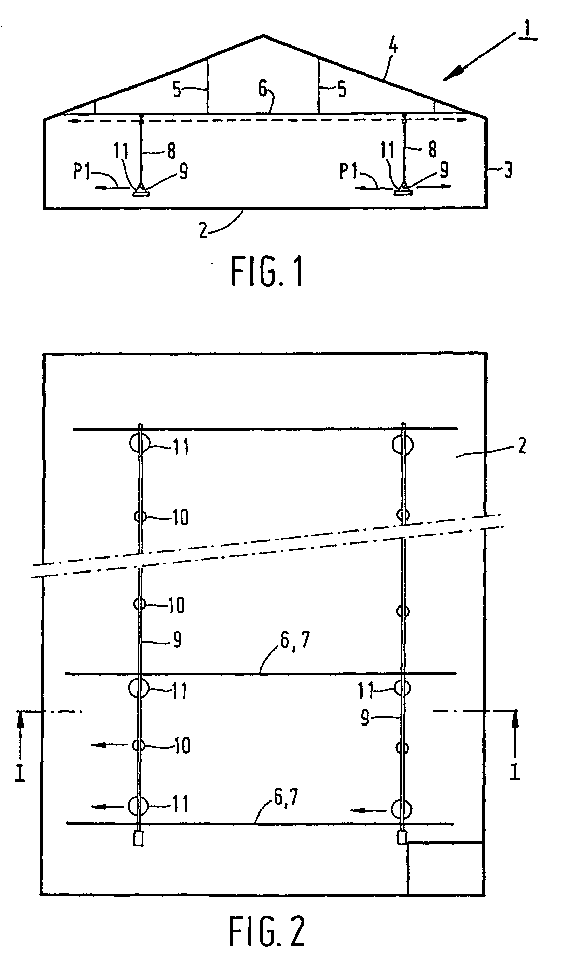

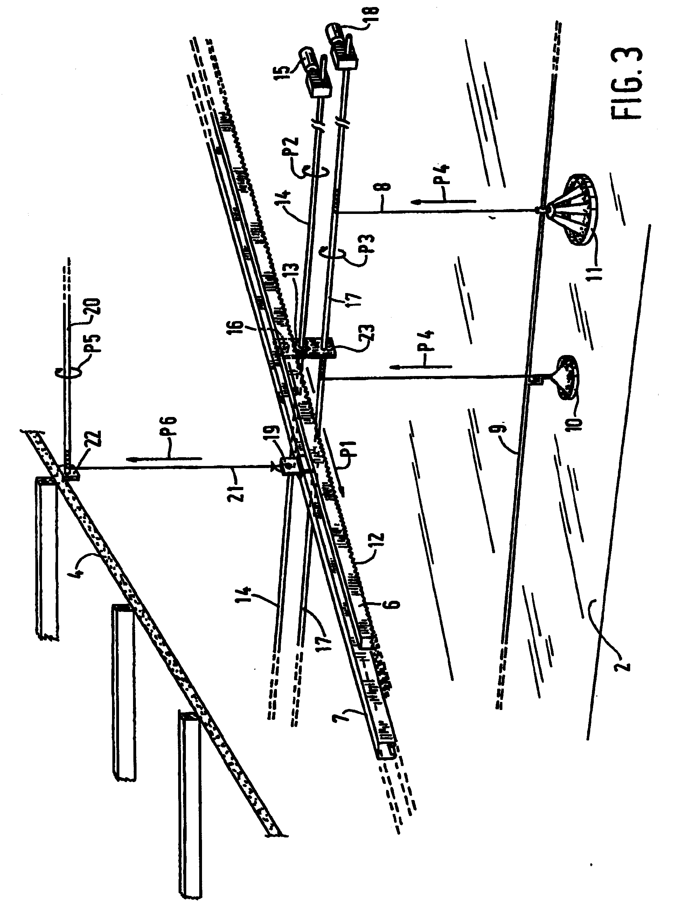

Figures 1 and 2 are a cross-sectional view and a top plan view, respectively, of a poultry house 1 according to the invention, which comprises a floor 2, walls 3 and a roof 4. Racks 6 are suspended from roof 4 by means of cables 5. Racks 6 extend parallel to each other in evenly spaced-apart relationship. Each rack 6 is provided with a guide rail 7 extending parallel to rack 6 (see Figure 3). Conduits 9 extending transversely to rack 6 are suspended from guide rails 7 by means of cables 8 that can be wound up. Conduits 9 each comprise a water supply line and a feed supply line. Water bowls 10 are connected to the water supply lines, whilst feed bowls 11 are connected to the feed supply lines. Conduits 9 can be moved horizontally, by means of pinions that mesh with racks 6 (see Figure 3), in the direction indicated by arrow P1 and in the opposite direction.

Figure 3 is a perspective view of the poultry house that is shown in Figures 1 and 2, wherein the various components are shown in more detail.

Rack 6 is made up of a U-shaped section, wherein the ends of the legs of the U-shape are provided with teeth 12 in a desired manner. Teeth 12 mesh with a pinion 13. Pinion 13 is journalled on a rod or shaft 14, which can be rotated in the direction indicated by arrow P12 and in the opposite direction by means of a motor 15. Also journalled on shaft 14 are pinions 13, which mesh with a rack extending parallel to rack 6. Shaft 14 extends through a plate 23 extending transversely to shaft 14, which plate 23 is provided with a roller bearing 16, which is rotatably supported in U-shaped guide rail 7. Furthermore, a second shaft 17 extending parallel to first shaft 14 is rotatably supported in plate 23. Rod or shaft 17, which can be rotated by means of a motor 18 in the direction indicated by arrow P3 and in the opposite direction, is provided with a number of cables 8 which can be wound onto shaft 17, which cables are connected to conduit 9 at an end remote from shaft 17. When shaft 17 is rotated in the direction indicated by arrow P3, cables 8 will be wound onto shaft 17, as a result of which conduit 9 will be moved upwards in the direction indicated by arrow P4. When shaft 17 is rotated in the opposite direction, conduit 9 will be moved downwards in the direction opposed to direction indicated by arrow P4.

Rack 6 is connected, by means of a suspension bracket 19, to a cable 21 that can be wound onto a shaft 20. Shaft 20 is supported in a plate 22 connected to roof 4, being rotatable therein in the direction indicated by arrow P5 and in the opposite direction. Cable 21, and thus the rack 6 connected thereto, are moved upwards in the direction indicated by arrow P6 by rotating shaft 20 in the direction indicated by arrow P5.

Floor 2 can be cleared, for example for carrying out cleaning work, by moving racks 6 and conduits 9 in upward direction.

In use, the water bowls 10 and feed bowls 11 that are connected to conduit 9 are positioned at the desired vertical level with respect to floor 2 by moving rack 6 and conduits 9 in downward direction. In addition, racks 6 will be positioned at such a level in the poultry house that a desired clear height for walking remains ensured.

After racks 6 and conduit 9 have been positioned at the desired level, and the poultry, for example turkeys or chickens, have been brought into the poultry house, conduits 9 and thus the water bowls 10 and the feed bowls 11 connected thereto are moved in the direction indicated by arrow P1 and in the opposite direction by driving shafts 14.

As a result, the poultry will scatter all over the poultry house 2, and if the poultry are thirsty or hungry, they will actively move towards the water bowl or the feed bowl in question. It is also possible, however, for the poultry to scatter all over the poultry house and wait patiently until the water or the feed comes near. In this way also slightly weakened animals are enabled in a simple manner to ingest water or feed. In both cases the excrements will be distributed evenly over the entire poultry house. Also the spilling of water will take place over a much larger area, so that the occurrence of relatively wet spots will be avoided. Since there are fewer fouled spots and/or wet spots in the poultry house, cleaning will not be necessary, which leads to a considerable saving in labour.

It is possible to suspend various conduits in spaced-apart relationship from one and the same rack 6. Said conduits can thereby be jointly moved forward and backward or in opposed directions.

The velocity at which the conduits are moved through the poultry house is relatively low, so that the poultry can move out of the way when a conduit 9 approaches.

It is also possible to move the feed bowls by means of a steel cable drive, a chain drive or a V-rope drive rather than by means of a rack-and-pinion drive.

It is possible to transport the feed through the conduits by means of a spiral or by means of a circulating chain system.

It is also possible to exchange the shaft 17 and the conduit 9 suspended therefrom for a feed conduit extending parallel to and near the first shaft 14. Said feed conduit must be provided with tubes extending downwards from the feed conduit, which open into feed bowls attached to the tubes. The advantage of such a system is that it is easier for persons to walk between the feed bowls without having to step over the feed conduits. The same solution is possible for the water conduits, of course.

It is also possible to provide the water conduit with a number of drinking nipples connected to the water conduit. If a relatively large number of drinking nipples is desired, it is also possible to arrange two water conduits, each provided with nipples, on either side of the feed conduit by means of brackets.

The filling of the feed tubes can take place in various ways. Thus it is possible, for example, to use a feed bowl which is moved together with the conduit, in which the feed bowl is filled by means of the telescopic tube. The telescopic tube extends from a relatively high position in the poultry house towards the feed bowl. Since it is telescopic, the tube can remain in constant communication with the feed bowl while the feed bowl and the feed conduit are being moved through the poultry house.

It is also possible to fill the feed bowl or the feed conduits each time they reach one end of the poultry house.

The supply of water and current to the equipment can take place through the guide rail 7, for example. To this end, elements which are movable within the guide rails can be provided, from which the water conduits and the current lines can be suspended in loops.

It is also possible to mount the guide rails on an upwardly sloping roof. In order to move the conduits 9 at a constant height through the poultry house, the cables 8 must alternately be lengthened and shortened while the conduit 9 is being moved. This can take place in a computer-controlled manner, for example, or by using a detection eye which turns the motor 18 on and off.

Since the feed bowls and water bowls of the poultry house equipment according to the invention are suspended, no feed bowls and water bowls are present on the poultry house floor. In addition, since the feed bowls and water bowls are moved back and forth, there are no accumulations of feed or wet litter on the poultry house floor. This makes it possible to use catching machines when the animals are to be removed from the poultry house, which catching machines can be moved across the free floor area in a simple manner. The use of a catching machine obviates the need to remove the animals from the poultry house by manpower. This is relatively unhealthy and heavy work, due to the presence of dust and ammonia. In addition, this work places a relatively heavy burden on a person's back.

Also for the animals themselves, the use of a catching machine is less stressful than the presence of human beings in the poultry house.

Although the conduit extends transversely to the rack in the embodiment that is shown in the figure, the conduit may also extend at a small angle to the rack.

It has become apparent that when feed bowls and water bowls that moved back and forth are used, up to 50% fewer feed bowls and water bowls are required in comparison with the situation in which stationary bowls are used.

Furthermore, the freedom of movement of persons in the poultry house is significantly improved.

## Claims

1. Poultry house equipment comprising feed bowls (11), which feed bowls (11) are movable in horizontal direction, **characterized in that** said poultry house equipment comprises at least one water and/or feed supply conduit (9) and water bowls (10) and/or feed bowls (11) connected to said conduit, as well as means (6, 13) for moving the conduit (9) and the bowls (10, 11) connected thereto in a direction substantially transversely to the longitudinal direction of the conduit (9).

2. Poultry house equipment according to claim 1, **characterized in that** said conduit (9) and the bowls (10, 11) connected thereto are movable in vertical direction.

3. Poultry house equipment according to claim 1, **characterized in that** said poultry house equipment comprises at least one horizontally extending rack (6), a rod (14) extending transversely to said rack, which is fitted with a pinion (13) that meshes with said rack (6), wherein said conduit (9) extends parallel to said rod (14) and is connected thereto.

4. Poultry house equipment according to claim 3, **characterized in that** said conduit (9) is suspended from said rod by means of cables (8) that can be wound up.

5. Poultry house equipment according to claim 3 or 4, **characterized in that** at least two rods (14, 17) fitted with pinions are coupled to a single rack, wherein the two rods (14, 17) are movable with respect to said rack.

6. Poultry house equipment according to claim 5, **characterized in that** said rods (14, 17) can be moved simultaneously.

7. Poultry house equipment according to claim 5, **characterized in that** said rods (14, 17) can be moved towards and away from each other.

8. Poultry house equipment according to claim 3, **characterized in that** said rack (6) is movable in vertical direction.

9. A method suitable for operating the poultry house equipment according to any one of the preceding claims, **characterized in that** the poultry house equipment comprises at least one water and/or feed supply conduit (9) and water bowls (10) and/or feed bowls (11) connected to said conduit (9), wherein the conduit (9) and the bowls (10, 11) connected thereto are moved back and forth substantially continuously in a direction substantially transversely to the longitudinal direction of the conduit (9).

## Patentansprüche

1. Geflügelhausausrüstung mit Futterschüsseln (11), welche in horizontaler Richtung beweglich sind, **dadurch gekennzeichnet, daß** die genannte Geflügelhausausrüstung mindestens einen Wasser- und/oder Futter-Zufuhrkanal (9) und mit dem genannten Kanal verbundene Wasserschüsseln (10) und/oder Futterschüsseln (11) umfaßt sowie Mittel (6, 13) zur Bewegung des Kanals (9) und der damit verbundenen Schüsseln (10, 11) in einer im wesentlichen quer zu der Längsrichtung des Kanals (9) verlaufenden Richtung.

2. Geflügelhausausrüstung nach Anspruch 1, **dadurch gekennzeichnet, daß** der genannte Kanal (9) und die damit verbundenen Schüsseln (10, 11) in vertikaler Richtung beweglich sind.

3. Geflügelhausausrüstung nach Anspruch 1, **dadurch gekennzeichnet, daß** die genannte Geflügelhausausrüstung mindestens eine horizontal verlaufende Zahnstange (6) umfaßt, eine quer zu der genannten Zahnstange verlaufende Stange (14), welche mit einem Zahnrad (13) ausgestattet ist, das in die genannte Zahnstange (6) eingreift, wobei der genannte Kanal (9) parallel zu der genannten Stange (14) verläuft und mit ihr verbunden ist.

4. Geflügelhausausrüstung nach Anspruch 3, **dadurch gekennzeichnet, daß** der genannte Kanal (9) mittels aufwickelbaren Seilen (8) an der genannten Stange aufgehängt ist.

5. Geflügelhausausrüstung nach Anspruch 3 oder 4, **dadurch gekennzeichnet, daß** mindestens zwei mit Zahnrädern ausgestattete Stangen (14, 17) an eine einzige Zahnstange angeschlossen sind, wobei die beiden Stangen (14, 17) in bezug auf die genannte Zahnstange beweglich sind.

6. Geflügelhausausrüstung nach Anspruch 5, **dadurch gekennzeichnet, daß** die genannten Stangen (14, 17) gleichzeitig bewegt werden können.

7. Geflügelhausausrüstung nach Anspruch 5, **dadurch gekennzeichnet, daß** die genannten Stangen (14, 17) aufeinander zu und voneinander weg bewegt werden können.

8. Geflügelhausausrüstung nach Anspruch 3, **dadurch gekennzeichnet, daß** die genannte Zahnstange (6) in vertikaler Richtung beweglich ist.

9. Verfahren zur Bedienung der Geflügelhausausrüstung nach einem der vorangehenden Ansprüche, **dadurch gekennzeichnet, daß** die Geflügelhausausrüstung mindestens einen Wasser- und/oder Futter-Zufuhrkanal (9) und mit dem genannten Kanal (9) verbundene Wasserschüsseln (10) und/oder Futterschüsseln (11) umfaßt, wobei der Kanal (9) und die damit verbundenen Schüsseln (10, 11) im wesentlichen kontinuierlich in einer im wesentlichen quer zur Längsrichtung des Kanals (9) verlaufenden Richtung hin- und herbewegt werden.

## Revendications

1. Equipement pour poulailler comprenant des mangeoires (11), lesdites mangeoires (11) sont mobiles dans la direction horizontale, **caractérisé en ce que** ledit équipement pour poulailler comprend au moins une conduite (9) d'approvisionnement en eau et/ou d'alimentation et des abreuvoirs (10) et/ou des mangeoires (11) raccordés à ladite conduite, ainsi qu'un moyen (6, 13) pour déplacer la conduite (9) et les abreuvoirs (10) et les mangeoires (11) qui lui sont raccordés dans une direction essentiellement transversale à la direction longitudinale la conduite (9).

2. Equipement pour poulailler selon la revendication 1, **caractérisé en ce que** ladite conduite (9) et les abreuvoirs (10) et les mangeoires (11) qui lui sont raccordés sont mobiles dans la direction verticale.

3. Equipement pour poulailler selon la revendication 1, **caractérisé en ce que** ledit équipement pour poulailler comprend au moins une crémaillère (6) s'étendant horizontalement, une barre (14) s'étendant transversalement à ladite crémaillère, qui est munie d'un pignon (13) qui s'engrène avec ladite crémaillère (6), ladite conduite (9) s'étendant parallèlement à ladite barre (14) et est raccordée à celle-ci.

4. Equipement pour poulailler selon la revendication 3, **caractérisé en ce que** ladite conduite (9) est suspendue à partir de ladite barre au moyen de câbles (8) qui peuvent être enroulés.

5. Equipement pour poulailler selon la revendication 3 ou 4, **caractérisé en ce qu'**au moins deux barres (14, 17) munies de pignons sont couplées à une seule crémaillère, les deux barres (14, 17) étant mobiles par rapport à ladite crémaillère.

6. Equipement pour poulailler selon la revendication 5, **caractérisé en ce que** lesdites barres (14, 17) peuvent être déplacées simultanément.

7. Equipement pour poulailler selon la revendication 5, **caractérisé en ce que** lesdites barres (14, 17) peuvent être déplacées l'une vers l'autre et écartées l'une de l'autre.

8. Equipement pour poulailler selon la revendication 3, **caractérisé en ce que** ladite crémaillère (6) est mobile dans la direction verticale.

9. Procédé convenant pour faire fonctionner l'équipement pour poulailler selon l'une quelconque des revendications précédentes, l'équipement pour poulailler comprenant au moins une conduite (9) d'approvisionnement en eau et/ou d'alimentation et des abreuvoirs (10) et/ou des mangeoires (11) raccordés à ladite conduite (9), dans lequel la conduite (9) et les abreuvoirs (10) et les mangeoires (11) qui lui sont raccordés effectuent un mouvement de va-et-vient essentiellement continu dans une direction essentiellement transversale à la direction longitudinale la conduite (9).
